# EUROPEAN PATENT SPECIFICATION

(11) **EP 1 634 460 B1**
(45) Date of publication and mention of the grant of the patent: **06.08.2014**
(21) Application number: 04755690.7
(22) Date of filing: 17.06.2004
(51) Int. Cl.: H04N 19/33

(54) **METHOD AND APPARATUS FOR LOW-COMPLEXITY SPATIAL SCALABLE ENCODING**
VORRICHTUNG UND VERFAHREN ZUR KODIERUNG UND DEKODIERUNG VON VIDEOBILDERN
DISPOSITIF ET MÉTHODE DE CODAGE ET DÉCODAGE D'IMAGES VIDÉO

(30) Priority: 19.06.2003 US 479734 P
(43) Date of publication of application: 15.03.2006
(73) Proprietor: Thomson Licensing, 92130 Issy-les-Moulineaux (FR)
(72) Inventor: BOYCE, Jill, MacDonald, Manalapan, NJ 07726 (US)
(74) Representative: Hofstetter, Schurack & Partner
(86) International application number: PCT/US2004/019682
(87) International publication number: WO 2004/114672

(56) References cited:
- EP-A- 0 577 337
- EP-A- 0 883 299
- WO-A-96/14711
- WO-A1-01/39503
- WO-A2-03/017672
- JP-A- 6 022 289
- US-A- 5 619 256
- US-A- 5 742 343
- US-A1- 2001 043 751
- US-B1- 6 587 505
- US-B1- 6 771 703
- ULRICH BENZLER: "Improvement of spatial scalability by subband decomposition", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M1514, 11 November 1996 (1996-11-11), XP030030809,

## Description

### FIELD OF THE INVENTION

The present invention is directed towards video coders and decoders (CODECs), and more particularly, towards an apparatus and method for spatial scalable encoding and decoding.

### BACKGROUND OF THE INVENTION

Broadcast video service providers currently use MPEG-2 to transmit standard definition ("SD") video programs. In the future, a transition to high definition ("HD") using the JVT/H.264/MPEG AVC ("JVT") standard is anticipated. Simulcasting of both an MPEG-2 SD program and a JVT HD version of the same program requires more bandwidth than if a scalable approach were used. However, scalable encoders and decoders are significantly more computationally complex than are non-scalable encoders and decoders.

Many different methods of scalability have been widely studied and standardized in the scalability profiles of the MPEG-2 and MPEG-4 standards, including SNR scalability, spatial scalability, temporal scalability, and fine grain scalability. Scalable coding has not been widely adopted in practice, however, because of the considerable increase in complexity for implementing scalable encoders and decoders.

Spatial scalable encoders and decoders typically require that the high-resolution scalable encoder/decoder provide functionality in addition to what would be present in a non-scalable high-resolution encoder/decoder. In an MPEG-2 spatial scalable encoder, a decision is made whether prediction is performed from a standard-resolution or a high-resolution reference picture. An MPEG-2 spatial scalable decoder is capable of predicting from either the standard-resolution picture or the high-resolution picture. Two sets of reference picture stores are used by an MPEG-2 spatial scalable encoder/decoder, one for standard-resolution pictures and another for high-resolution pictures.

Accordingly, what is needed is a reduced-complexity spatial scalable encoder/decoder capable of supporting both SD and HD versions of the same program over limited-bandwidth connections.

EP 0 883 299 A2 describes an apparatus for coding and deconding digital video images that is equipped with a low-resolution and a high-resolution storage unit. A high-resolution picture updating unit converts corresponing blocks of a low-resolution reference picture to obtain high-resolution block images. It then updates the high-resolution with the obtained high-resolution block images.

US 5,742,343 A relates to multi-level encoding and decoding of high-resolution video signals, such as high-definition television signals. Here a scalable coding of high resolution progressive format video signals is provided, whereby a base layer of coding and an enhancement layer of coding are combinded to form a new encoded video signal.

In the article of U. Benzler "Improvement of spatial scalability by subband decomposition" a subband approach to scalable multiresolution video coding is presented. This scheme is applied to the coding of Intra-frames, where bit rate savings up to 15.4% compared with MPEG-2 spatial scalability are achieved.

### SUMMARY OF THE INVENTION

These and other drawbacks and disadvantages of the prior art are addressed by an apparatus and method for low-complexity spatial scalable encoding.

The encoder, for receiving high-resolution video and providing compressed high-resolution scalable and standard-resolution bitstreams, includes a standard-resolution encoder (312), a selector (346) coupled with the standard-resolution encoder for selecting between a signal indicative of the received high-resolution sequence and a signal indicative of a standard-resolution version of the received sequence, and a high-resolution encoder (348) coupled with the selector for providing a high-resolution scalable bitstream.

These and other aspects, features and advantages of the present invention will become apparent from the following description of exemplary embodiments, which is to be read in conjunction with the accompanying drawings.

### BRIEF DESCRIPTION OF THE DRAWINGS

The present invention may be better understood in accordance with the following exemplary figures, in which:
Figure 1 shows a block diagram for a relatively high-complexity spatial scalable encoder;
Figure 2 shows a block diagram for a relatively high-complexity spatial scalable decoder;
Figure 3 shows a block diagram for a low-complexity spatial scalable encoder in accordance with principles of the present invention; and
Figure 4 shows a block diagram for a low-complexity spatial scalable decoder in accordance with principles of the present invention.

### DETAILED DESCRIPTION OF PREFERRED EMBODIMENTS

Embodiments of the presently disclosed invention provide a method and apparatus for low-complexity, generally low-cost, spatial scalable encoding and decoding. In the description that follows, an encoder and decoder may be collectively referred to as a CODEC for purposes of simplicity, although method and apparatus embodiments may be capable of only encoding, only decoding, or both encoding and decoding.

In accordance with the principles of the invention, a low-complexity spatial scalable CODEC utilizes non-scalable encoder and/or decoder blocks. The term "normal" may be used herein and/or in the drawings to refer to generally non-scalable as opposed to specifically scalable elements and/or features of higher complexity, and shall specifically not imply that the element and/or feature is necessarily conventional.

In the instant embodiment of the present invention, Intra-coded (I) pictures are scalably coded using a spatial scalability technique, while non-intra coded (P and B) pictures are encoded non-scalably. The high-resolution input image is down-sampled to form a standard-resolution image, and the standard-resolution image is encoded and decoded using a non-scalable encoder/decoder. The decoded image is up-sampled, and then subtracted from the input high-resolution image. The difference between the high-resolution image and the up-sampled standard-resolution image is then encoded using a non-scalable encoder. At the decoder end, only I-coded standard-resolution pictures are decoded using a non-scalable decoder, then they are up-sampled and added to the decoded high-resolution difference signal, to form the high-resolution output pictures. Non I-coded high-resolution pictures are decoded non-scalably.

Thus, in the instant embodiment of the present invention, spatial scalable encoding/decoding is performed only for Intra-coded pictures or slices, and non-scalable encoding/decoding for non-intra coded pictures or slices. Scalable encoding provides a significant coding efficiency advantage as compared to simulcast for intra-coded (I) pictures, but less of an advantage for inter-coded (B and P) pictures. The complexity of a spatial scalable encoder and decoder can be considerably reduced by using scalability techniques only in intra-coded pictures, while retaining much of the coding efficiency advantages.

In accordance with the principles of the present invention, scalability-capable video encoder and decoder modules are not required. Instead non-scalable high-resolution encoders and decoders can be used in this system, in conjunction with additional functional blocks. The standard resolution and high-resolution encoders and decoders may comply with any video compression standard, such as MPEG-2, MPEG-4, or H.264. For example, the standard-resolution encoder and decoder may be standards-compliant MPEG-2 Main Profile, and the high-resolution encoder and decoder may be standards-compliant H.264 encoders and decoders. Other combinations may also be considered, as would be apparent to those skilled in the art.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means that can provide those functionalities as equivalent to those shown herein.

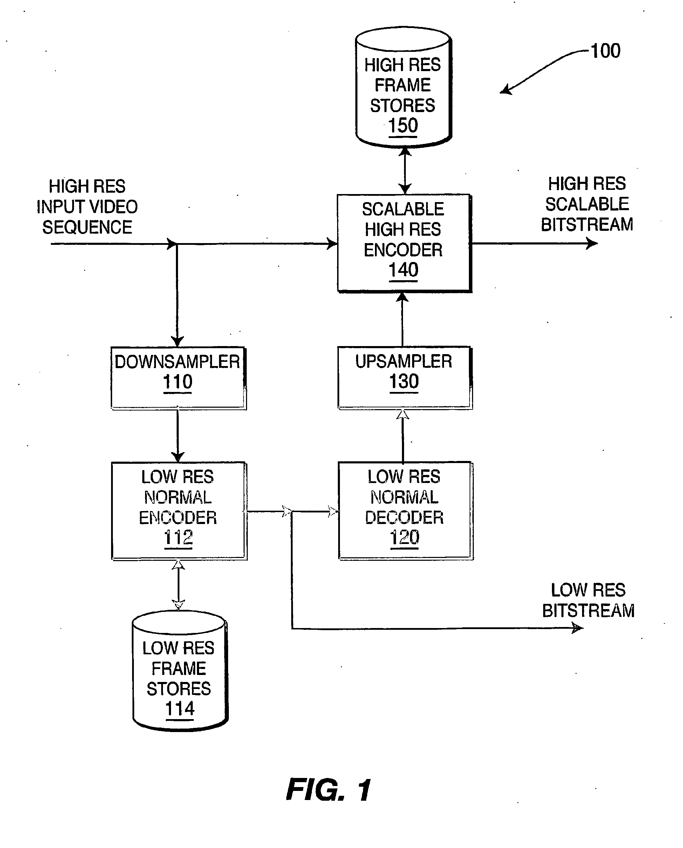

As shown in Figure 1, a standard-complexity spatial scalable encoder supporting two layers is indicated generally by the reference numeral 100. The encoder 100 includes a downsampler 110 for receiving a high-resolution input video sequence. The downsampler 110 is coupled in signal communication with a standard-resolution non-scalable encoder 112, which, in turn, is coupled in signal communication with standard-resolution frame stores 114. The standard-resolution non-scalable encoder 112 outputs a standard-resolution bitstream, and is further coupled in signal communication with a standard-resolution non-scalable decoder 120.

The standard-resolution non-scalable decoder 120 is coupled in signal communication with an upsampler 130, which, in turn, is coupled in signal communication with a scalable high-resolution encoder 140. The scalable high-resolution encoder 140 also receives the high-resolution input video sequence, is coupled in signal communication with high-resolution frame stores 150, and outputs a high-resolution scalable bitstream.

Thus, a high resolution input video sequence is received by the standard-complexity encoder 100 and down-sampled to create a standard-resolution video sequence. The standard-resolution video sequence is encoded using a non-scalable standard-resolution video compression encoder, creating a standard-resolution bitstream. The standard-resolution bitstream is decoded using a non-scalable standard-resolution video compression decoder. (This function may be performed inside of the encoder.) The decoded standard-resolution sequence is up-sampled, and provided as one of two inputs to a scalable high-resolution encoder. The scalable high-resolution encoder encodes the video to create a high-resolution scalable bitstream.

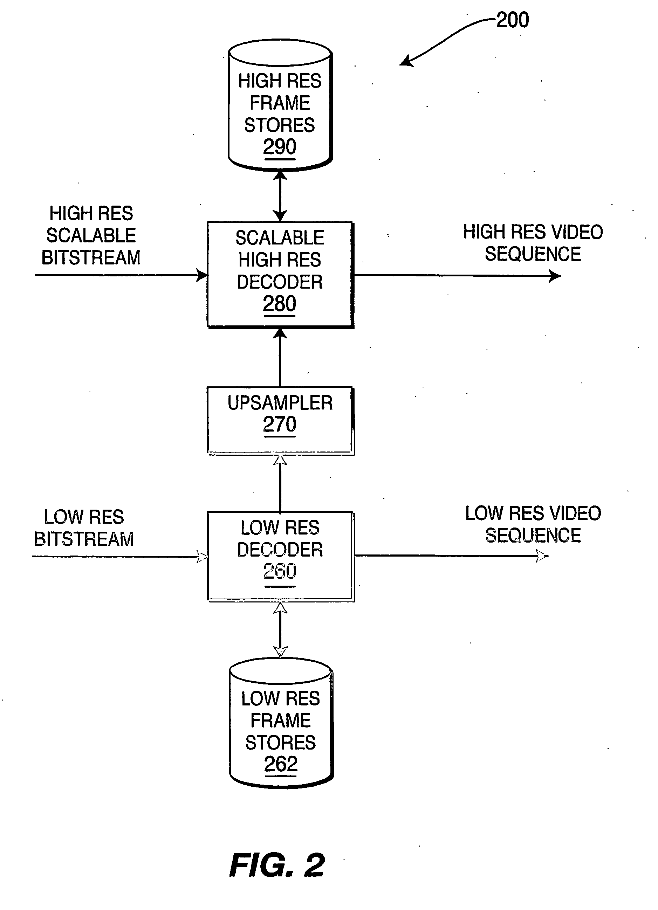

Turning to Figure 2, a standard-complexity spatial scalable decoder supporting two layers is indicated generally by the reference numeral 200. The spatial scalable decoder 200 includes a standard-resolution decoder 260 for receiving a standard-resolution bitstream, which is coupled in signal communication with standard-resolution frame stores 262, and outputs a standard-resolution video sequence. The standard-resolution decoder 260 is further coupled in signal communication with an upsampler 270, which, in turn, is coupled in signal communication with a scalable high-resolution decoder 280.

The scalable high-resolution decoder 280 is further coupled in signal communication with high-resolution frame stores 290. The scalable high-resolution decoder 280 receives a high-resolution scalable bitstream and outputs a high-resolution video sequence.

Thus, both a high-resolution scalable bitstream and standard-resolution bitstream are received by the standard-complexity decoder 200. The standard-resolution bitstream is decoded using a non-scalable standard-resolution video compression decoder, which utilizes standard-resolution frame stores. The decoded standard-resolution video is up-sampled, and then input into a high-resolution scalable decoder. The high-resolution scalable decoder utilizes a set of high-resolution frame stores, and creates the high-resolution output video sequence.

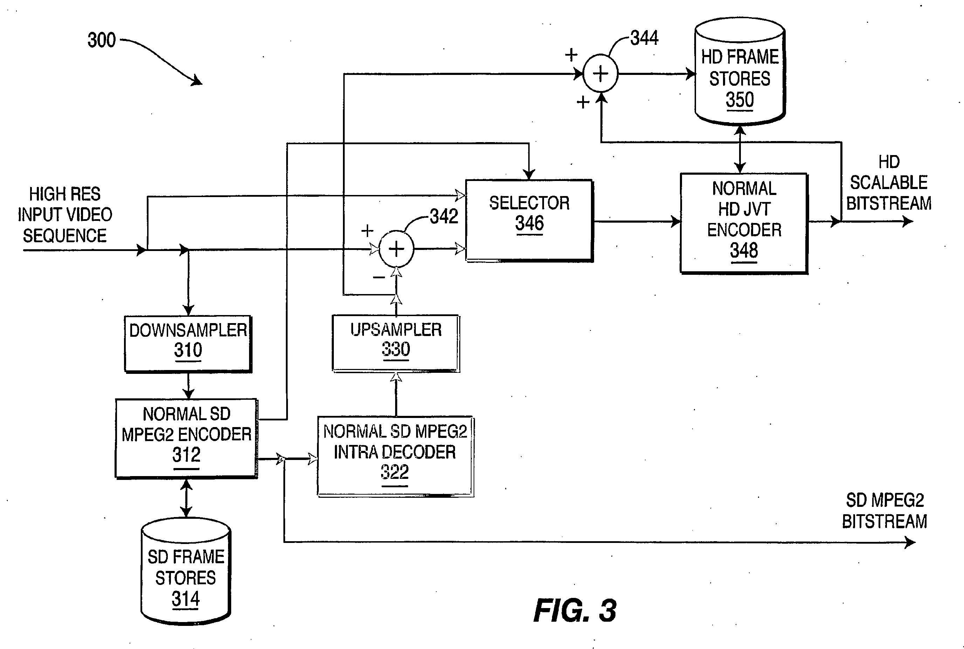

As shown in Figure 3, a low-complexity spatial scalable encoder supporting two layers is indicated generally by the reference numeral 300. The encoder 300 includes a downsampler 310 for receiving a high-resolution input video sequence. The downsampler 310 is coupled in signal communication with a standard-resolution non-scalable encoder 312, which, in turn, is coupled in signal communication with standard-resolution frame stores 314. The standard-resolution non-scalable encoder 312 outputs a standard-resolution bitstream, and is further coupled in signal communication with a standard-resolution non-scalable Intra decoder 322.

The non-scalable standard-resolution Intra decoder 322 is coupled in signal communication with an upsampler 330, which, in turn, is coupled in signal communication with each of an inverting input of a first summing unit 342 and a non-inverting input of a second summing unit 344. The first summing unit 342 has a non-inverting input for receiving the high-resolution input video sequence, and has an output coupled in signal communication with a selector 346. The selector 346 also has an input for receiving the high-resolution input video sequence, as well as a third input for receiving an I-slice/I-picture indicator from the standard-resolution non-scalable encoder 312. The selector 346 is coupled in signal communication with a non-scalable high-resolution encoder 348. The non-scalable high-resolution encoder 348 is for outputting a high-resolution scalable bitstream, and is coupled in signal communication with a non-inverting input of the summing unit 344. The non-scalable high-resolution encoder 348 is further coupled in signal communication with frame stores 350. The frame stores 350 are coupled in signal communication with an output of the summing unit 344.

Thus, the low-complexity spatial scalable encoder embodiment 300 receives a high-resolution input video sequence. The sequence is down-sampled to create a standard-resolution video sequence. The standard-resolution video sequence is encoded using a non-scalable standard-resolution encoder, creating a standard-resolution bitstream. The Intra-coded (I) pictures are decoded using a non-scalable standard-resolution decoder. Alternatively, this function may be performed as a ancillary function within the encoder itself. The decoded standard-resolution I pictures are up-sampled, and subtracted from the input video pictures. An offset (for example -128), may optionally be added to the difference, to maintain pixel values in the range of [0, 255]. These difference pictures are then input to a non-scalable high-resolution video compression encoder. The up-sampled standard-resolution decoded I pictures are added to the high-resolution encoded difference signal, with optional offset, before storage in the high-resolution frame stores. This allows a correct reference picture to be used in subsequent non-scalable coding of P and B pictures. For the non-I pictures (P and B), the input video sequence pictures are input to the non-scalable high-resolution video encoder, and encoded non-scalably.

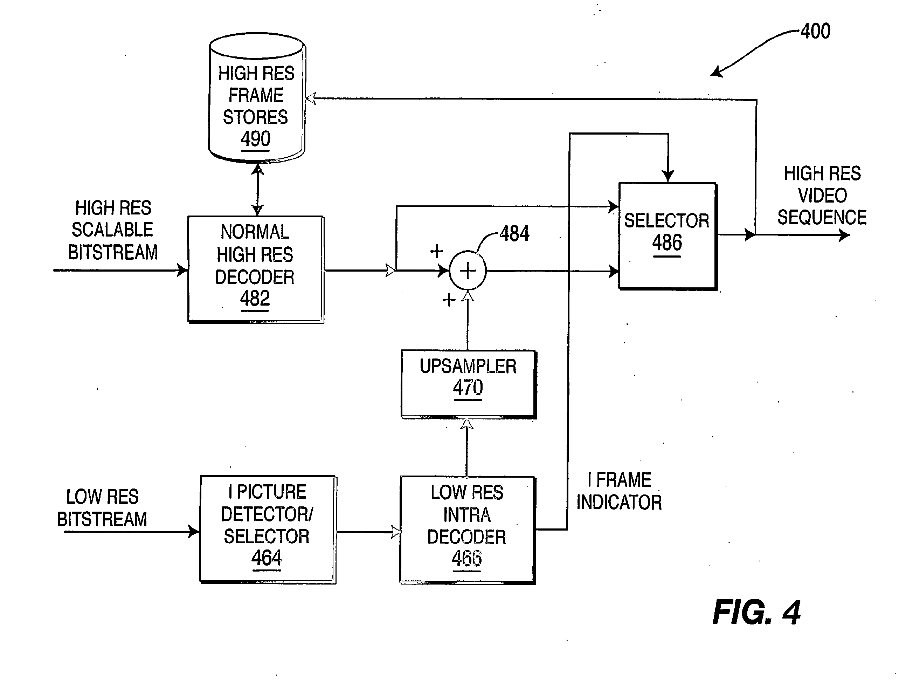

Turning to Figure 4, a low-complexity spatial scalable decoder supporting two layers is indicated generally by the reference numeral 400. The low-complexity spatial scalable decoder 400 includes an I-picture detector/selector 464 for receiving a standard-resolution bitstream, which is coupled in signal communication with a standard-resolution Intra decoder 466. The standard-resolution Intra decoder 466 is coupled in signal communication with an upsampler 470, which, in turn, is coupled in signal communication with a first non-inverting input of a summing unit 484. The standard-resolution Intra decoder 466 is further coupled in signal communication with a first input of a selector 486 for providing an intra-coding indicator to the selector 486.

The low-complexity spatial scalable decoder 400 further includes a non-scalable high-resolution decoder 482 for receiving a high-resolution scalable bitstream. The high-resolution decoder 482 is coupled in signal communication with each of a second non-inverting input of the summing unit 484, a second input of the selector 486, and high-resolution frame stores 490. The summing unit 484 has an output coupled in signal communication with a third input of the selector 486. The selector 486 outputs a high-resolution video sequence, and is coupled in signal communication with the high-resolution frame stores 490.

Thus, the low-complexity spatial scalable decoder embodiment 400 includes an I-picture selector/detector that searches the received standard-resolution bitstream and removes all non-I picture coded data. It may identify I-picture data by searching for picture start codes in the bitstream, and decoding the picture coding type from the picture header. A non-scalable standard resolution Intra decoder then decodes the I-picture data. An Intra only decoder such as this is of considerably lower complexity than a full video compression decoder, and does not require standard-resolution reference frame stores. The decoded standard-resolution Intra pictures are up-sampled.

The high-resolution scalable bitstream is input to a non-scalable high-resolution decoder. For non-I pictures, its output is selected as the output high-resolution video sequence. For I pictures, the high-resolution decoded output is added to the up-sampled standard resolution decoded I pictures, which is selected to form the output high-resolution video sequence. For scalable I pictures, the output high-resolution video picture is stored in the reference frame store, rather than the output of the non-scalable high-resolution decoder.

While the non-scalable high resolution decoder and standard-resolution intra decoder are shown as separate boxes in the block diagram, a single multifunction decoder could be used to perform both functions. Because intra decoding is generally much less complex than inter decoding, if a general purpose processor is used, it may be utilized to perform both the standard resolution intra picture decode and high resolution intra picture decode during the same time period as would be required to perform a high resolution inter picture decode.

In the H.264 video coding standards, individual slices in the same picture may be coded using different prediction types. For example, a picture may contain both an I slice and a P slice. If H.264 is used for both the high resolution and standard resolution encoding in this invention, scalability may be performed on I slices rather than I pictures, with the requirement that the macroblocks corresponding to the I slices of the up-sampled standard resolution picture are also coded as I slices. The I-picture detector/selector would become an I-slice detector/selector, in this embodiment.

If MPEG-2, or another coding standard which requires that all slices in the same picture be coded using the same prediction type, is used in the standard resolution layer, and H.264 is used in the high resolution layer, the selection of whether or not scalability is applied is dependent on the picture coding type used in the standard resolution layer. I-slices may be coded in the high resolution H.264 layer even if the corresponding MPEG-2 standard-resolution layer is not an I-picture, but scalability is not applied.

Various methods can be used for the upsampler and downsampler functions, including bi-linear interpolation, or multi-tap interpolation and decimation filters, as are well known to those skilled in the art.

The high resolution video sequence pictures may contain data not represented by the standard resolution video sequence pictures, for example if the high resolution pictures have a 16:9 aspect ratio and the standard resolution pictures have a 4:3 aspect ratio. In that case, the up-sampling function can set to a value of zero for those pixels that do not correspond to pixels present in the standard-resolution picture.

These and other features and advantages of the present invention may be readily ascertained by one of ordinary skill in the pertinent art based on the teachings herein. It is to be understood that the principles of the present invention may be implemented in various forms of hardware, software, firmware, special purpose processors, or combinations thereof.

Most preferably, the principles of the present invention are implemented as a combination of hardware and software. Moreover, the software is preferably implemented as an application program tangibly embodied on a program storage unit. The application program may be uploaded to, and executed by, a machine comprising any suitably architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art without departing from the scope of the present invention. All such changes and modifications are intended to be included within the scope of the present invention as set forth in the appended claims.

## Claims

1. A spatial scalable video encoder (300) for receiving a high-resolution video sequence and providing each of a standard-resolution bitstream and a high-resolution scalable bitstream, the encoder comprising:
a standard-resolution non-scalable encoder (312) for outputting a standard resolution bitstream responsive to the received high-resolutiuon video sequence;
a standard-resolution non-scalable Intra decoder (322) being coupled to the standard-resolution non-scalable encoder (312) for decoding the Intra-coded pictures;
an upsampler (330) being coupled to the standard-resolution non-scalable Intra decoder (322) for providing an upsampled pictures;
a summing unit (342) for providing a difference picture between the received high-resolution video sequence and the upsampled pictures;
a selector (346) being coupled to the standard-resolution non-scalable encoder (312) for selecting between a signal indicative of the received high-resolution video sequence and a signal indicative of the difference picture; wherein the difference picture is selected in response to an indication of an I-picture and the received high-resolution video picture is selected in response to an indication of a non-I-picture; and
a non-scalable high-resolution encoder (348) being coupled to the selector for providing a high-resolution scalable bitstream.

2. An encoder as defined in Claim 1, wherein the standard resolutuion non-scalable enconder (312) provides at least one of an I-picture indicator and an I-slice indicator to the selector (346).

3. An encoder as defined in Claim 1, further comprising:
a downsampler (310) being coupled to the standard-resolution non-scalable encoder (312).

4. An encoder as defined in Claim 1, further comprising standard-resolution frame stores (314) being coupled to the standard-resolution non-scalable encoder (312).

5. An encoder as defined in Claim 1, further comprising high-resolution frame stores (350) being coupled to the non-scalable high-resolution encoder (348).

6. An encoder as defined in Claim 1, further comprising:
high-resolution frame stores (350) being coupled to the non-scalable high-resolution encoder (348); and
a summing unit (344) coupled between the standard-resolution non-scalable Intra decoder (322) and the high-resolution frame stores (350).

7. An encoding method for providing spatial scalable encoded video data, the method comprising:
receiving a high-resolution video picture;
down-sampling the received high-resolution video picture to standard-resolution (310);
non-scalable encoding the standard-resolution picture (312);
outputting the encoded standard-resolution picture in an encoded standard-resolution bitstream;
if the standard-resolution picture is encoded as an I-picture, non-scalable decoding the encoded standard-resolution I-pictures from the encoded standard resolution bitstream (322);
up-sampling the decoded standard-resolution I-pictures (330);
subtracting the up-sampled decoded standard-resolution I-pictures from the received high-resolution video picture to form a difference picture (342);
selecting between the received high-resolution video picture and the difference picture; wherein the difference picture is selected in response to an indication of an I-picture and the received high-resoltion video picture is selected in response to an indication of a non-I-picture (346); and
non-scalable high-resolution encoding the selected picture (348).

8. A encoding method as defined in Claim 7, further comprising:
summing the up-sampled I-picture with the high-resolution encoded difference picture to form a high-resolution I-picture (344);
storing the high-resolution I-picture (350); and
if the standard-resolution picture is not encoded as an I-picture, retrieving at least one stored picture for high-resolution encoding the selected picture.

## Patentansprüche

1. Räumlich skalierbarer Videoencoder (300) zum Empfangen einer hochauflösenden Videosequenz und zum Bereitstellen sowohl eines Standardauflösungs-Bitstroms als auch eines hochauflösenden skalierbaren Bitstroms, wobei der Encoder umfasst:
einen nicht-skalierbaren Standardauflösungs-Encoder (312) zum Ausgeben eines Standardauflösungs-Bitstroms in Ansprechen auf die empfangene hochauflösende Videosequenz;
einen nicht-skalierbaren Standardauflösungs-Intra-Decoder (322), der mit dem nicht-skalierbaren Standardauflösungs-Encoder (312) gekoppelt ist, um die intra-codierten Bilder zu decodieren;
einen Aufwärtsabtaster (330), der mit dem nicht-skalierbaren Standardauflösungs-Intra-Decoder (322) gekoppelt ist, um aufwärtsabgetastete Bilder bereitzustellen;
eine Summiereinheit (342), um ein Differenzbild zwischen der empfangenen hochauflösenden Videosequenz und den aufwärtsabgetasteten Bildern bereitzustellen;
eine Auswahleinrichtung (346), die mit dem nicht-skalierbaren Standardauflösungs-Encoder (312) gekoppelt ist, um zwischen einem Signal, das die empfangene hochauflösende Videosequenz angibt, und einem Signal, das das Differenzbild angibt, zu wählen; wobei das Differenzbild in Ansprechen auf eine Angabe eines I-Bilds gewählt wird und das empfangene hochauflösende Videobild in Ansprechen auf eine Angabe eines Nicht-I-Bilds gewählt wird; und
einen nicht-skalierbaren hochauflösenden Encoder (348), der mit der Auswahleinrichtung gekoppelt ist, um einen hochauflösenden skalierbaren Bitstrom bereitzustellen.

2. Encoder nach Anspruch 1, wobei der nicht-skalierbare Standardauflösungs-Encoder (312) für die Auswahleinrichtung (346) einen I-Bild-Indikator und/oder einen I-Slice-Indikator bereitstellt.

3. Encoder nach Anspruch 1, der ferner umfasst:
einen Abwärtsabtaster (310), der mit dem nicht-skalierbaren Standardauflösungs-Encoder (312) gekoppelt ist.

4. Encoder nach Anspruch 1, der ferner Standardauflösungs-Bildspeicher (314) umfasst, die mit dem nicht-skalierbaren Standardauflösungs-Encoder (312) gekoppelt sind.

5. Encoder nach Anspruch 1, der ferner Speicher (350) für hochauflösende Bilder umfasst, die mit dem nicht-skalierbaren hochauflösenden Encoder (348) gekoppelt sind.

6. Encoder nach Anspruch 1, der ferner umfasst:
Speicher (350) für hochauflösende Bilder, die mit dem nicht-skalierbaren hochauflösenden Encoder (348) gekoppelt sind; und
eine Summiereinheit (344), die zwischen den nicht-skalierbaren Standardauflösungs-Intra-Decoder (322) und die Speicher (350) für hochauflösende Bilder geschaltet ist.

7. Codierungsverfahren zum Bereitstellen räumlich skalierbarer codierter Videodaten, wobei das Verfahren umfasst:
Empfangen eines hochauflösenden Videobilds;
Abwärtsabtasten des empfangenen hochauflösenden Videobilds auf Standardauflösung (310);
nicht-skalierbares Codieren des Standardauflösungs-Bilds (312);
Ausgeben des codierten Standardauflösungs-Bilds in einem codierten Standardauflösungs-Bitstrom;
nicht-skalierbares Decodieren der codierten Standardauflösungs-I-Bilder von dem codierten Standardauflösungs-Bitstrom (322), falls das Standardauflösungs-Bild als ein I-Bild codiert ist;
Aufwärtsabtasten der decodierten Standardauflösungs-I-Bilder (330);
Subtrahieren der aufwärtsabgetasteten decodierten Standardauflösungs-I-Bilder von dem empfangenen hochauflösenden Videobild, um ein Differenzbild (342) zu bilden;
Wählen zwischen dem empfangenen hochauflösenden Videobild und dem Differenzbild; wobei das Differenzbild in Ansprechen auf eine Angabe eines I-Bilds gewählt wird und das empfangene hochauflösende Videobild in Ansprechen auf eine Angabe eines Nicht-I-Bilds (346) gewählt wird; und
nicht-skalierbares hochauflösendes Codieren des gewählten Bilds (348).

8. Codierungsverfahren nach Anspruch 7, das ferner umfasst:
Summieren des aufwärtsabgetasteten I-Bilds mit dem hochauflösenden codierten Differenzbild, um ein hochauflösendes I-Bild (344) zu bilden;
Speichern des hochauflösenden I-Bilds (350); und
Abrufen mindestens eines gespeicherten Bilds zur hochauflösenden Codierung des gewählten Bilds, falls das Standardauflösungs-Bild nicht als ein I-Bild codiert ist.

## Revendications

1. Encodeur vidéo modulable spatial (300) pour recevoir une séquence vidéo à haute résolution et fournir chacun d'un train de bits à résolution standard et d'un train de bits modulable à haute résolution, l'encodeur comprenant :
un encodeur non modulable à résolution standard (312) pour émettre un train de bits à résolution standard en réponse à la séquence vidéo à haute résolution reçue ;
un décodeur intra non modulable à résolution standard (322) qui est raccordé à l'encodeur non modulable à résolution standard (312) pour décoder les images intra-codées ;
un échantillonneur à la hausse (330) qui est raccordé au décodeur intra non modulable à résolution standard (322) pour fournir des images échantillonnées à la hausse ;
un module sommateur (342) pour fournir une image de différence entre la séquence vidéo à haute résolution reçue et les images échantillonnées à la hausse ;
un sélecteur (346) qui est raccordé à l'encodeur non modulable à résolution standard (312) pour sélectionner entre un signal indicateur de la séquence vidéo à haute résolution reçue et un signal indicateur de l'image de différence ; dans lequel l'image de différence est sélectionnée en réponse à une indication d'une image I et
l'image vidéo à haute résolution reçue est sélectionnée en réponse à une indication d'une image non-I ; et
un encodeur non modulable à haute résolution (348) qui est raccordé au sélecteur pour fournir un train de bits modulable à haute résolution.

2. Encodeur selon la revendication 1, dans lequel l'encodeur non modulable à résolution standard (312) fournit au moins un d'un indicateur d'image I et d'un indicateur de tranche I au sélecteur (346).

3. Encodeur selon la revendication 1, comprenant en outre :
un échantillonneur à la baisse (310) qui est raccordé à l'encodeur non modulable à résolution standard (312).

4. Encodeur selon la revendication 1, comprenant en outre des tampons de trame à résolution standard (314) qui sont raccordés à l'encodeur non modulable à résolution standard (312).

5. Encodeur selon la revendication 1, comprenant en outre des tampons de trame à haute résolution (350) qui sont raccordés à l'encodeur non modulable à haute résolution (348).

6. Encodeur selon la revendication 1, comprenant en outre :
des tampons de trame à haute résolution (350) qui sont raccordés à l'encodeur non modulable à haute résolution (348) ; et
un module sommateur (344) raccordé entre le décodeur intra non modulable à résolution standard (322) et les tampons de trame à haute résolution (350).

7. Procédé d'encodage pour fournir des données vidéo encodées modulables spatiales, le procédé comprenant :
recevoir une image vidéo à haute résolution ;
échantillonner à la baisse l'image vidéo à haute résolution reçue à la résolution standard (310) ;
encoder de manière non modulable l'image à résolution standard (312) ;
émettre l'image à résolution standard encodée dans un train de bits à résolution standard encodé ;
si l'image à résolution standard est encodée en tant qu'image I, décoder de manière non modulable les images I à résolution standard encodées à partir du train de bits à résolution standard encodé (322) ;
échantillonner à la hausse les images I à résolution standard décodées (330) ;
soustraire les images I à résolution standard décodées échantillonnées à la hausse de l'image vidéo à haute résolution reçue pour former une image de différence (342) ;
sélectionner entre l'image vidéo à haute résolution reçue et l'image de différence ; dans lequel l'image de différence est sélectionnée en réponse à une indication d'une image I et l'image vidéo à haute résolution reçue est sélectionnée en réponse à une indication d'une image non-I (346) ; et
encoder à haute résolution de manière non modulable l'image sélectionnée (348).

8. Procédé d'encodage selon la revendication 7, comprenant en outre :
additionner l'image I échantillonnée à la hausse à l'image de différence encodée à haute résolution pour former une image I à haute résolution (344) ;
stocker l'image I à haute résolution (350) ; et
si l'image à résolution standard n'est pas encodée en tant qu'image I, récupérer au moins une image stockée pour encoder à haute résolution l'image sélectionnée.
